# EUROPÄISCHE PATENTANMELDUNG

(11) **EP 0 900 768 A1**
(43) Veröffentlichungstag der Anmeldung: **10.03.1999**
(21) Anmeldenummer: 98116130.0
(22) Anmeldetag: 26.08.1998
(51) Int. Cl.: C03C 10/04, C03C 8/24

(54) **Verwendung kristallisierbarer Glaszusammensetzungen als Verschlussmaterial von Mantellleitungen**

(30) Priorität: 08.09.1997 DE 19739242
(71) Anmelder: FRAUNHOFER-GESELLSCHAFT ZUR FÖRDERUNG DER ANGEWANDTEN FORSCHUNG E.V., 80636 München (DE)
(72) Erfinder: Durschang, Bernhard R., Dr., 97072 Würzburg (DE); Reise, Michael, 63303 Dreieich-Offenthal (DE)
(74) Vertreter: Olgemöller, Luitgard, Dr.

(57) **Zusammenfassung**

Die vorliegende Erfindung betrifft die Verwendung einer glasartigen kristallisierbaren Zusammensetzung mit folgenden Bestandteilen:

| | |
|---|---|
| SiO₂ | 40 - 85 Gew.-% |
| Li₂O | 3 - 20 Gew.-% |
| ZnO | 0 - 40 Gew.-% |
| MgO | 0 - 35 Gew.-% |
| Al₂O₃ | 0 - 12 Gew.-% |
| B₂O₃ | 0 - 12 Gew.-% |
| P₂O₅ | 0 - 8 Gew.-% |
| ZrO₂ | 0 - 8 Gew.-% |
| TiO₂ | 0 - 10 Gew.-% |
| K₂O | 0 - 10 Gew.-% |
| Na₂O | 0 - 10 Gew.-%, |

mit der Maßgabe, daß Na₂O und K₂O zusammen nicht über 15 Gew.-% ausmachen,
die nach Kristallisation eine Glaskeramik mit einem Ausdehnungskoeffizienten im Bereich von α₂₁₋₆₀₀=10,0x10⁻⁶K⁻¹ bis α₂₁₋₆₀₀=15.0x10⁻⁶K⁻¹ bildet, bzw. die Verwendung einer entsprechenden kristallisierten Glaskeramik, als elektrisch isolierendes Abdichtmaterial, insbesondere von Mantelleitungen von Sensoren in Abgasanlagen von Kraftfahrzeugen.

## Beschreibung

Die vorliegende Erfindung betrifft kristallisierbare Glaszusammensetzungen und Glaskeramiken, die für den Einsatz als Verschlußmaterial von Mantelleitungen geeignet sind.

In Abgasanlagen von Kraftfahrzeugen wird angestrebt, die Sensoren möglichst nahe an den Motor zu legen. Für den Anschluß der Abgassensoren werden mineralisolierte Mantelleitungen eingesetzt, die mit Hilfe eines elektrisch isolierenden, feuchtedichten Verschlußmaterials zur Abdichtung des hygroskopischen Isolationsmaterials verschlossen werden. Der Stand der Technik ist hier die Verwendung von Gläsern, die aber bei Einsatztemperaturen oberhalb 400 °C unbefriedigende Isolationseigenschaften aufweisen, da Gläser mit an Metalle angepaßten thermischen Ausdehnungskoeffizienten zumeist sehr niedrige Transformationstemperaturen (T_{g}) und hohe Alkaliionenkonzentrationen aufweisen. Gläser mit einem hohen Ausdehnungskoeffizienten weisen eine deutliche elektrische Leitfähigkeit bei höheren Temperaturen auf. Auch die chemische Beständigkeit ist bei diesen Temperaturen oberhalb T_{g} als kritisch anzusehen. Die alkalifreien Gläser dagegen, die in der DE 195 09 132 A1 offenbart sind, besitzen zwar gute Isolationseigenschaften; jedoch sind ihre Ausdehnungskoeffizienten nicht zufriedenstellend. Außerdem sind sie stark bleihaltig, was aus Kosten- und Umweltgründen nicht erwünscht ist. Nachteilig ist weiterhin, daß das Einschmelzen dieser Zusammensetzungen mit wenigen Ausnahmen Temperaturen von über 1000°C erfordert. Bei diesen Temperaturen kann bereits auch eine schädigende Zunderung des Mantelmaterials auftreten.

Ein Einsatz bei höheren Betriebstemperaturen bedingt damit die Verwendung neuer Materialien. Für Temperaturen deutlich oberhalb 400 °C können keine Kunststoffe mehr eingesetzt werden, so daß Materialien aus dem anorganischen Bereich gefunden werden müssen. Infolge des geforderten elektrischen Isolationsverhaltens können auch keine Metalle eingesetzt werden.

Der Einsatz von kristallisierenden Gläsern (Glaskeramiken) als Verschluß- und Beschichtungsmaterial ist bekannt. Glaskeramiken werden in verschiedenen Bereichen mit unterschiedlichen Kontaktmaterialien eingesetzt (siehe das Review von I.W. Donald in Journal of Materials Science 28 (1993), 2841-2886). Alkalihaltige Glaskeramiken sind dafür bekannt, daß sie eine erhöhte Tendenz zu elektrischer Leitfähigkeit aufweisen. Dabei kann die Leitung einerseits über die Matrix der Restglasphase, andererseits auch über die Kristallphase selbst erfolgen. Alkalifreie Glaskeramiken sind dagegen wegen des Temperaturlimits auf etwa 1000°C für das Einschmelzen der Ausgangsgläser nicht verwendbar.

Keramikpulver scheiden insbesondere durch die Sinterschwindungen aus, die einen gasdichten Verschluß nach einem großen Volumenverlust in einem festliegenden Volumen nicht realistisch erscheinen lassen.

Aufgabe der vorliegenden Erfindung ist es, kristallisierbare glasartige Zusammensetzungen sowie daraus hergestellte Glaskeramiken zur Verwendung als Verschlußmaterial von Mantelleitungen mit hitze- und korrosionsbeständigen Metallen und Legierungen wie Nickelbasislegierungen (z.B. 2.4186) zur Verfügung zu stellen, die bei Temperaturen bis zu mindestens 600°C oder darüber hinaus elektrisch isolierend, feuchtedicht und chemisch stabil sind.

Diese Aufgabe wird gelöst durch die glasartigen kristallisierbaren Zusammensetzungen des Anspruchs 1 und die Glaskeramiken des Anspruchs 6. Die Ansprüche 2 bis 5 und 7 bis 10 zeigen bevorzugte Ausgestaltungen.

Überraschenderweise konnte gefunden werden, daß trotz des hohen Lithiumgehalts die erfindungsgemäßen Zusammensetzungen ausgezeichnete Isolationseigenschaften besitzen. Dies war nicht zu erwarten, da Lithium als guter Ionenleiter bekannt ist.

Außerdem zeigen die Zusammensetzungen geeignete Ausdehnungskoeffizienten und sind unter 1000°C einschmelzbar. Besonders geeignete Ausdehnungskoeffizienten von α₂₁₋₆₀₀ ≥ 12,0x10⁻⁶K⁻¹ lassen sich durch relativ geringe Anteile an Aluminiumoxid erreichen. Es ist daher bevorzugt, Al₂O₃, wenn vorhanden, in einer Menge von nicht mehr als 10 Gew.-%, besonders bevorzugt von nicht mehr als 6 Gew.-% und ganz besonders bevorzugt von nicht mehr als 4 Gew.-% einzusetzen.

Die Zusammensetzungen der vorliegenden Erfindung eignen sich daher ausgezeichnet als Verschlußmaterial für mineralisolierte Mantelleitungen, z.B. für Zuführungen an Abgassensoren von Kraftfahrzeugen. Als Mantelleitungsmaterial für solche Sensorzuführungen werden häufig Nickelbasislegierungen, z.B. 2.4816, eingesetzt. Vorzugsweise wird bei diesen Legierungen eine Temperaturführung zum Einschmelzen und Kristallisieren der Glaskeramiken unterhalb 1000 °C angestrebt, da ansonsten eine schädigende Zunderung des Metalls stattfinden kann.

Materialien wie Nickelbasislegierungen (z.B. 2.4816) werden von den erfindungsgemäßen Zusammensetzungen benetzt. Im verwendbaren Temperaturbereich fließen sie und kristallisieren. Die durch die Kristallisation erhaltenen Glaskeramiken besitzen vorzugsweise eine Ausdehnung ähnlich der von Nickelbasislegierungen, wie z.B. von 2.4816. Weiterhin besitzen die erfindungsgemäßen Glaskeramiken eine gute chemische Beständigkeit sowohl gegenüber Materialien wie Nickelbasislegierungen (z.B. 2.4816) oder anderen verwendbaren Legierungen oder Metallen als auch ggf. gegenüber Abgasen. Auch genügen sie in Bezug auf die erstrebten elektrischen Eigenschaften den geforderten Einsatzbedingungen.

Die erfindungsgemäßen Glaskeramiken enthalten auskristallisiertes Lithiumdisilikat (Li₂Si₂O₅) oder Lithiumzinksilicat (Li₂ZnSiO₄), bei Anwesenheit von Magnesium in der Glasmischung auch Enstatit (MgSiO₃).

Bevorzugte Gläser haben die folgende Zusammensetzung:

### System 1:

| | |
|---|---|
| SiO₂ | 60 - 80 Gew.-% |
| Li₂O | 7 - 17 Gew.-% |
| Al₂O₃ | 0 - 10 Gew.-% |
| B₂O₃ | 0 - 10 Gew.-% |
| MgO | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-% |
| Na₂O und K₂O zusammen nicht über 15 Gew.-%. | |

Außerdem können z.B. zur Verbesserung der verarbeitungstechnischen Eigenschaften weitere Komponenten zugegeben werden, z.B. ZnO, TiO₂, CaO, BaO in Mengen bis zu 8 Gew.-% jeder Komponente, zusammen nicht über 15 Gew.-%.

Der Aluminiumoxidgehalt liegt vorzugsweise bei ≤ 6 Gew.-%, ganz besonders bevorzugt bei ≤ 4 Gew.-%.

### System 2:

| | |
|---|---|
| SiO₂ | 45 - 70 Gew.-% |
| Li₂O | 5 - 15 Gew.-% |
| ZnO | 10 - 30 Gew.-% |
| B₂O₃ | 0 - 10 Gew.-% |
| P₂O₅ | 0 - 5 Gew.-% |
| ZrO₂ | 0 - 5 Gew.-% |
| TiO₂ | 0 - 10 Gew.-% |
| K₂O | 0 - 10 Gew.-% |
| Na₂O | 0 - 10 Gew.-% |
| Na₂O und K₂O zusammen nicht über 15 Gew.-%. | |

Außerdem können z.B. zur Verbesserung der verarbeitungstechnischen Eigenschaften weitere Komponenten zugegeben werden, z.B. Al₂O₃, MgO, CaO, BaO in Mengen bis zu 8 Gew.-% jeder Komponente, zusammen nicht über 15 Gew.-%.

### System 3:

| | |
|---|---|
| SiO₂ | 45 - 75 Gew.-% |
| Li₂O | 5 - 15 Gew.-% |
| MgO | 5 - 25 Gew.-% |
| Al₂O₃ | 0 - 10 Gew.-% |
| B₂O₃ | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-% |
| Na₂O und K₂O zusammen nicht über 15 Gew.-%. | |

Der Aluminiumoxidgehalt liegt vorzugsweise bei ≤ 6 Gew.-%, ganz besonders bevorzugt bei ≤ 4 Gew.-%.

Außerdem können z.B. zur Verbesserung der verarbeitungstechnischen Eigenschaften weitere Komponenten zugegeben werden, z.B. ZnO, TiO₂, CaO, BaO in Mengen bis zu 8 Gew.-% jeder Komponente, zusammen nicht über 15 Gew.-%.

Die Gemenge werden in den entsprechenden Anteilen aus den Rohstoffen (Oxiden, Carbonaten etc.) hergestellt und eingeschmolzen. Aus der Schmelze kann sowohl ein Glasblock als auch eine Fritte gegossen werden. Das Glas kann z.B. als Paste, Formteil oder als Pulver weiterverarbeitet werden.

Die Gläser der bevorzugten Systeme weisen folgende Transformationstemperaturen auf:

| | Transformationstemperatur (Tg) |
|---|---|
| System 1: | 440 - 520 °C |
| System 2: | 420 - 510 °C |
| System 3: | 450 - 550 °C |

Bei der bevorzugten Verwendung zur Abdichtung von Mantelleitungen und zur Kristallisation des Glases wird ein Temperaturprofil benötigt. Zwischenstufen, wie z.B. eine Haltetemperatur zur Keimbildung, können von Vorteil sein. Für die bevorzugten Glaskeramiksysteme sind Temperaturprofile wie folgt möglich:

| | Einschmelztemp. | Kristallisationstemp. |
|---|---|---|
| System 1: | 850 - 1100 °C | 600 - 900 °C |
| System 2: | 750 - 1050 °C | 550 - 850 °C |
| System 3: | 850 - 1100 °C | 600 - 900 °C |

Ein mehrstufiges Temperaturprofil ist bevorzugt. (Bei der Verwendung von Pasten wird zum Ausbrennen der organischen Bestandteile ein entsprechender Temperaturschritt notwendig.) Anschließend wird das Glas auf die Einschmelztemperatur erhitzt. Für einige Zeit wird diese Temperatur gehalten, worauf man auf eine Temperatur zurückfährt, die die Keimbildung begünstigt. Nach einer Verweildauer bei dieser Temperatur wird auf die Kristallisationstemperatur aufgeheizt. Nach einer längeren Verweildauer läßt man abkühlen. Ein beispielhaftes Temperaturschema ist in Figur 2 dargestellt.

Bei der beschriebenen Temperaturbehandlung kristallisiert mindestens eine der folgenden Phasen aus:

| | |
|---|---|
| System 1: | Li₂Si₂O₅, Li₂SiO₃ |
| System 2: | Li₂ZnSiO₄ |
| System 3: | Li₂Si₂O₅, Li₂SiO₃, MgSiO₃,Mg₂SiO₄. |

Kristallisieren bei der Temperaturbehandlung im wesentlichen oder überhaupt keine weiteren Phasen aus, weisen die resultierenden Glaskeramiken bei geeigneter Kristallisationsbehandlung einen Ausdehnungs-Koeffizienten zwischen α₂₁₋₆₀₀ = 10,0·10⁻⁶ K⁻¹, bevorzugt 12,0·10⁻⁶ K⁻¹ und α₂₁₋₆₀₀ = 15,0·10⁻⁶ K⁻¹ auf.

Infolge der Verwendung nur geringer Anteile an Aluminiumoxid läßt sich erfindungsgemäß die Bildung von Cordierit oder Spodumen völlig bzw. in nennenswerten Mengen vermeiden. Die beiden Kristallformen besitzen nur sehr geringe Ausdehnungskoeffizienten.

Für die mechanischen Eigenschaften wird ein möglichst feinkristallines Gefüge angestrebt. Der Restglasphasenanteil kann entsprechend dem gewünschten Ausdehnungskoeffizienten eingestellt werden (der Ausdehnungskoeffizient nimmt mit der Zunahme des Restglasphasenanteils zu), sollte aber in Hinblick auf die erwünschte niedrige elektrische Leitfähigkeit nicht mehr als 30 Volumenanteile betragen.

Die elektrischen Isolationseigenschaften wurden sowohl an den gefüllten Mantelleitungen als auch an den Glaskeramiken geprüft. An den Mantelleitungen wurden hierfür die Einsatzbedingungen gewählt, für die Materialuntersuchungen eine Gleichspannung von 14,5 V bei einer Probendicke von 0,5 mm. Es zeigte sich, daß spezifische Widerstände oberhalb von 1 MΩcm bei einer Prüftemperatur von 600°C erzielt werden können.

Die Dichtigkeit der Mantelleitungsverschlüsse wurde mit Hilfe von Leitfähigkeitsmessungen untersucht. Hierbei zeigt sich, daß bei im Ausdehnungsverhalten gut angepaßten Glaskeramiken ein feuchtedichter Verschluß erreicht wird.

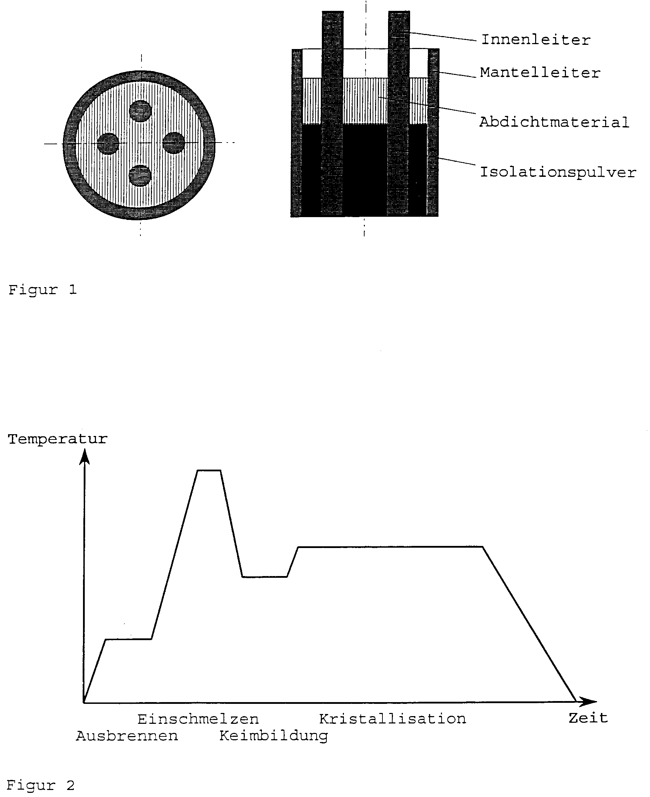

**Figur 1** zeigt schematisch eine Mantelleitung als Sensorzuleitung. Mit 1 ist einer der Innenleiter bezeichnet, die z.B. aus einer Nickelbasislegierung (z.B. 2.4186) bestehen können, mit 2 der Mantelleiter, z.B. 2.4186 aus demselben Material, mit 3 ist das Abdichtmaterial bezeichnet, und mit 4 die Füllung, die z.B. aus MgO- oder Al₂O₃-Pulver besteht.

### Ausführungsbeispiele:

Nachfolgend werden für jedes der bevorzugten Systeme Ausführungsbeispiele angegeben.

Die Einschmelztemperaturen sind mittels Erhitzungsmikroskop ermittelt worden. Die Keimbildung erfolgte 50K oberhalb T_{g}. Die Kristallisation fand bei 650 °C für 10h statt. Die angegebenen Leitfähigkeitswerte bei 600 °C wurden unter einer Gleichspannung von 14,5 V ermittelt. Sie lagen bei allen angegebenen Proben oberhalb 1 MΩcm.

### Beispiele System 1:

| Zusammensetzung Gew.-%: | | |
|---|---|---|
| | A | B |
| SiO₂ | 76 | 68 |
| Li₂O | 8 | 16 |
| Al₂O₃ | 6 | 4 |
| B₂O₃ | 3 | 5 |
| P₂O₅ | 2 | - |
| K₂O | 5 | - |
| MgO | - | 7 |
| Einschmelztemperatur | 950°C | 930° |

### Beispiele System 2:

| Zusammensetzung Gew.-%: | | |
|---|---|---|
| | A | B |
| SiO₂ | 48 | 58 |
| Li₂O | 10 | 11 |
| ZnO | 28 | 23 |
| B₂O₃ | 5 | 3 |
| P₂O₅ | 3 | - |
| ZrO₂ | 4 | - |
| TiO₂ | 2 | - |
| CaO | - | 5 |
| Einschmelztemperatur | 970°C | 970°C |

### Beispiel System 3:

| Zusammensetzung (Gew.-%): | | |
|---|---|---|
| | A | B |
| SiO₂ | 67 | 73 |
| Li₂O | 10 | 14 |
| MgO | 14 | 10 |
| Al₂O₃ | 4 | 4 |
| B₂O₃ | 5 | - |
| ZrO₂ | - | - |
| Einschmelztemperatur | 920°C | 920°C |

## Patentansprüche

1. Verwendung einer glasartigen kristallisierbaren Zusammensetzung mit folgenden Bestandteilen:
| | |
|---|---|
| SiO₂ | 40 - 85 Gew.-% |
| Li₂O | 3 - 20 Gew.-% |
| ZnO | 0 - 40 Gew.-% |
| MgO | 0 - 35 Gew.-% |
| Al₂O₃ | 0 - 12 Gew.-% |
| B₂O₃ | 0 - 12 Gew.-% |
| P₂O₅ | 0 - 8 Gew.-% |
| ZrO₂ | 0 - 8 Gew.-% |
| TiO₂ | 0 - 10 Gew.-% |
| K₂O | 0 - 10 Gew.-% |
| Na₂O | 0 - 10 Gew.-%, |
mit der Maßgabe, daß Na₂O und K₂O zusammen nicht über 15 Gew.-% ausmachen,
die nach Kristallisation eine Glaskeramik mit einem Ausdehnungskoeffizienten im Bereich von α₂₁₋₆₀₀=10,0x10⁻⁶K⁻¹ bis α₂₁₋₆₀₀=15.0x10⁻⁶K⁻¹ bildet,
als elektrisch isolierendes, glaskeramisches Abdichtmaterial.

2. Verwendung einer glasartigen Zusammensetzung nach Anspruch 1, dadurch gekennzeichnet, daß sie zusätzlich CaO und/oder BaO in einer Menge von jeweils bis zu 10 Gew.-%, zusammen jedoch nicht mehr als 15 Gew.-% der Zusammensetzung enthält.

3. Verwendung einer glasartigen Zusammensetzung nach Anspruch 1 oder 2 mit den folgenden Bestandteilen:
| | |
|---|---|
| SiO₂ | 60 - 80 Gew.-% |
| Li₂O | 7 - 17 Gew.-% |
| Al₂O₃ | 0 - 10 Gew.-% |
| B₂O₃ | 0 - 10 Gew.-% |
| MgO | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-% |
mit der Maßgabe, daß Na₂O und K₂O zusammen nicht über 15 Gew.-% ausmachen.

4. Verwendung einer glasartigen Zusammensetzung nach Anspruch 1 oder 2 mit den folgenden Bestandteilen:
| | |
|---|---|
| SiO₂ | 45 - 70 Gew.-% |
| Li₂O | 5 - 15 Gew.-% |
| ZnO | 10 - 30 Gew.-% |
| B₂O₃ | 0 - 10 Gew.-% |
| P₂O₅ | 0 - 5 Gew.-% |
| ZrO₂ | 0 - 5 Gew.-% |
| TiO₂ | 0 - 8 Gew.-% |
| K₂O | 0 - 10 Gew.-% |
| Na₂O | 0 - 10 Gew.-% |
mit der Maßgabe, daß Na₂O und K₂O zusammen nicht über 15 Gew.-% ausmachen.

5. Verwendung einer glasartigen Zusammensetzung nach Anspruch 1 oder 2 mit den folgenden Bestandteilen:
| | |
|---|---|
| SiO₂ | 45 - 75 Gew.-% |
| Li₂O | 5 - 15 Gew.-% |
| MgO | 5 - 25 Gew.-% |
| Al₂O₃ | 0 - 10 Gew.-% |
| B₂O₃ | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-% |
mit der Maßgabe, daß Na₂O und K₂O zusammen nicht über 15 Gew.-% ausmachen.

6. Mineralisolierte Mantelleitung, insbesondere für Sensoren in Abgasanlagen von Kraftfahrzeugen, dadurch gekennzeichnet, daß sie als Abdichtmaterial eine Glaskeramik mit folgenden Bestandteilen:
| | |
|---|---|
| SiO₂ | 40 - 85 Gew.-% |
| Li₂O | 3 - 20 Gew.-% |
| ZnO | 0 - 40 Gew.-% |
| MgO | 0 - 35 Gew.-% |
| Al₂O₃ | 0 - 12 Gew.-% |
| B₂O₃ | 0 - 12 Gew.-% |
| P₂O₅ | 0 - 8 Gew.-% |
| ZrO₂ | 0 - 8 Gew.-% |
| TiO₂ | 0 - 10 Gew.-% |
| K₂O | 0 - 10 Gew.-% |
| Na₂O | 0 - 10 Gew.-%, |
mit der Maßgabe, daß Na₂O und K₂O zusammen nicht über 15 Gew.-% ausmachen,
und mit einem Ausdehnungskoeffizienten im Bereich von α₂₁₋₆₀₀=10,0x10⁻⁶K⁻¹ bis α₂₁₋₆₀₀=15,0x10⁻⁶K⁻¹, enthält.

7. Mineralisolierte Mantelleitung nach Anspruch 6, dadurch gekennzeichnet, daß sie zusätzlich CaO und/oder BaO in einer Menge von jeweils bis zu 10 Gew.-%, zusammen jedoch nicht mehr als 15 Gew.-% der Zusammensetzung, enthält.

8. Mineralisolierte Mantelleitung nach Anspruch 6 oder 7 mit den folgenden Bestandteilen:
| | |
|---|---|
| SiO₂ | 60 - 80 Gew.-% |
| Li₂O | 7- 17 Gew.-% |
| Al₂O₃ | 0 - 10 Gew.-% |
| B₂O₃ | 0 - 10 Gew.-% |
| MgO | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-%, |
mit der Maßgabe, daß Na₂O und K₂O zusammen nicht über 15 Gew.-% ausmachen.

9. Mineralisolierte Manteilleitung nach Anspruch 6 oder 7 mit den folgenden Bestandteilen:
| | |
|---|---|
| SiO₂ | 45 - 70 Gew.-% |
| Li₂O | 5 - 15 Gew.-% |
| ZnO | 10 - 30 Gew.-% |
| B₂O₃ | 0 - 10 Gew.-% |
| P₂O₅ | 0 - 5 Gew.-% |
| ZrO₂ | 0 - 5 Gew.-% |
| TiO₂ | 0 - 8 Gew.-% |
| K₂O | 0 - 10 Gew.-% |
| Na₂O | 0 - 10 Gew.-% |
mit der Maßgabe, daß Na₂O und K₂O zusammen nicht über 15 Gew.-% ausmachen.

10. Mineralisolierte Mantelleitung nach Anspruch 6 oder 7 mit den folgenden Bestandteilen:
| | |
|---|---|
| SiO₂ | 45 - 75 Gew.-% |
| Li₂O | 5 - 15 Gew.-% |
| MgO | 5 - 25 Gew.-% |
| Al₂O₃ | 0 - 10 Gew.-% |
| B₂O₃ | 0 - 10 Gew.-% |
| P₂O₅ | 0 - 5 Gew.-% |
| ZrO₂ | 0 - 5 Gew.-% |
| K₂O | 0 - 10 Gew.-% |
| Na₂O | 0 - 10 Gew.-% |
mit der Maßgabe, daß Na₂O und K₂O zusammen nicht über 15 Gew.-% ausmachen.
